# EUROPEAN PATENT APPLICATION

(11) **EP 4 228 062 A1**
(43) Date of publication of application: **16.08.2023**
(21) Application number: 21891109.7
(22) Date of filing: 09.11.2021
(51) Int. Cl.: H01M 50/105, B32B 15/20

(54) **BATTERY PACKAGING FILM, METHOD FOR PREPARING BATTERY PACKAGING FILM, AND ELECTRONIC DEVICE**

(30) Priority: 11.11.2020 CN 202011256369
(71) Applicant: Huawei Technologies Co., Ltd., Shenzhen, Guangdong 518129 (CN)
(72) Inventor: LI, Zhixian, Shenzhen, Guangdong 518129 (CN); XU, Fan, Shenzhen, Guangdong 518129 (CN)
(74) Representative: Huawei European IPR
(86) International application number: PCT/CN2021/129653
(87) International publication number: WO 2022/100589

(57) **Abstract**

This application provides a battery packaging film. The battery packaging film includes a metal layer, a first bonding enhancement layer, a first bonding layer, a second bonding layer, a first protective layer, and a second protective layer. The first bonding enhancement layer is located on a first surface of the metal layer. The first bonding layer is located on a surface that is of the first bonding enhancement layer and that is away from the metal layer. The first protective layer is located on a surface that is of the first bonding layer and that is away from the metal layer. The second bonding layer is located between the metal layer and the second protective layer. The second protective layer is located on a surface that is of the second bonding layer and that is away from the metal layer. Because the first bonding enhancement layer is added to an upper surface of the metal layer, roughness of the upper surface of the metal layer is increased, so that strength of bonding between the first protective layer and the metal layer is increased. In this way, it is more difficult to strip the first protective layer from the metal layer, so that safety of the battery packaging film is effectively improved.

## Description

This application claims priority to Chinese Patent Application No. 202011256369.0, filed with the China National Intellectual Property Administration on November 11, 2020 and entitled "BATTERY PACKAGING FILM, METHOD FOR PREPARING BATTERY PACKAGING FILM, AND ELECTRONIC DEVICE", which is incorporated herein by reference in its entirety.

### TECHNICAL FIELD

This application relates to the field of battery technologies, and in particular, to a battery packaging film, a method for preparing a battery packaging film, and an electronic device.

### BACKGROUND

As a green power supply, a lithium-ion battery is widely used in electronic products such as notebooks, tablets, and mobile phones due to a high energy density, a long cycle life, and a low self-discharge rate of the lithium-ion battery. At present, lithium-ion battery packaging films in the market all use an aluminum-plastic film. However, the aluminum-plastic film has relatively low strength. When a battery is damaged by an external force, the aluminum-plastic film is first damaged, and cannot protect a bare cell. As a result, electrodes of the bare cell are also damaged, causing an unsafe event such as a short circuit or heating due to direct contact between positive and negative electrodes of the battery.

In the conventional technology, one manner is increasing strength of the battery packaging film by increasing a thickness of an aluminum layer in the aluminum-plastic film. However, this method causes the aluminum-plastic film to be relatively thick, which is unfavorable to energy density improvement of the lithium-ion battery. Another manner is replacing the aluminum-plastic film with a steel-plastic film, that is, replacing the aluminum layer with a stainless steel layer. However, the steel-plastic film is excessively hard. In a production process of the lithium-ion battery, it is difficult to package the steel-plastic film, resulting in very low production efficiency and yield and difficult commercialization. Therefore, how to produce a safe battery packaging film is an urgent problem to be resolved.

### SUMMARY

This application provides a battery packaging film, a method for preparing a battery packaging film, and an electronic device, to improve safety of the electronic device.

According to a first aspect, this application provides a battery packaging film. The battery packaging film includes a metal layer, a first bonding enhancement layer, a first bonding layer, a second bonding layer, a first protective layer, and a second protective layer. The first bonding enhancement layer is located on a first surface of the metal layer. The first bonding layer is located on a surface that is of the first bonding enhancement layer and that is away from the metal layer. The first protective layer is located on a surface that is of the first bonding layer and that is away from the metal layer. The second bonding layer is located between the metal layer and the second protective layer. The second protective layer is located on a surface that is of the second bonding layer and that is away from the metal layer.

Because the first bonding enhancement layer is added to the upper surface of the metal layer, roughness of the upper surface of the metal layer is increased, so that strength of bonding between the first protective layer and the metal layer is increased. Because the first protective layer is firmly bonded to the metal layer, it is more difficult to strip the first protective layer from the metal layer, so that safety of the battery packaging film is improved.

In a possible implementation of this application, the battery packaging film further includes a second bonding enhancement layer. The second bonding enhancement layer is located on a second surface of the metal layer. The first surface is opposite to the second surface. That the second bonding layer is located between the metal layer and the second protective layer is specifically: the second bonding layer is located on a surface that is of the second bonding enhancement layer and that is away from the metal layer.

In this way, the first bonding enhancement layer and the second bonding enhancement layer are added to the upper surface and the lower surface of the metal layer, so that roughness of the upper surface and the lower surface of the metal layer can be increased, so that strength of bonding between the metal layer and each of the first protective layer and the second protective layer is increased. Because the first protective layer and the second protective layer are firmly bonded to the metal layer, it is more difficult to strip the first protective layer and the second protective layer from the metal layer, so that safety of the battery packaging film is improved.

In a possible implementation of this application, the first bonding enhancement layer or the second bonding enhancement layer includes nano ceramic or nano thermally conductive non-ceramic.

Because the nano thermally conductive non-ceramic layer has good thermal conductivity, heat inside a battery can still be dissipated in time when strength of the battery packaging film and surface roughness of the metal layer are improved. This avoids heat accumulation inside the battery and further improves safety of the battery packaging film.

In a possible implementation of this application, ceramic in the nano ceramic accounts for a percentage of 1% to 60%, or non-ceramic in the nano thermally conductive non-ceramic accounts for a percentage of 1% to 60%.

In a possible implementation of this application, the nano ceramic is a mixture of one or more of the following inorganic substances of 0.1 nm to 100 nm: silicon oxide (SiO₂), boehmite (AlOOH), aluminum oxide (Al₂O₃), zirconium oxide (ZrO₂), zinc oxide (ZnO), titanium oxide (TiO₂), and silicon carbide (SiC).

In a possible implementation of this application, the nano thermally conductive non-ceramic is graphene or carbon nanotubes.

In a possible implementation of this application, a thickness of the first bonding enhancement layer or the second bonding enhancement layer is 1 um to 20 um.

In a possible implementation of this application, the metal layer is a metal or an alloy stronger than aluminum.

In a possible implementation of this application, the metal layer is a metal layer including copper foil, zinc, platinum, iron, nickel, titanium, cobalt, manganese, or vanadium. Alternatively, the metal layer is an alloy layer including one or more metals including copper foil, zinc, platinum, iron, nickel, titanium, cobalt, manganese, or vanadium.

In a possible implementation of this application, the alloy layer is an aluminum-copper alloy or a zinc-manganese alloy.

In a possible implementation of this application, a melting point of the first protective layer is higher than a melting point of the second protective layer.

In a possible implementation of this application, a thickness of the first protective layer is 10 um to 30 um.

In a possible implementation of this application, a thickness of the second protective layer is 20 um to 80 um.

In a possible implementation of this application, a thickness of the metal layer is 25 um to 60 um.

According to a second aspect, this application further provides a battery. The battery includes a bare cell and the battery packaging film according to any one of the first aspect or the implementations of the first aspect, the battery packaging film wraps the bare cell, the first protective layer is located on a side away from the bare cell, and the second protective layer is located on a side close to the bare cell.

In a possible implementation of this application, the battery is a lithium-ion battery.

According to a third aspect, this application further provides an electronic device. The electronic device includes a display screen, a circuit board, a housing, and the battery according to any one of the second aspect or the implementations of the second aspect. The battery and the display screen are respectively located on two sides of the circuit board, and are accommodated in a closed space formed by the housing.

According to a fourth aspect, this application further provides an electronic device. The electronic device includes the battery according to any one of the second aspect or the implementations of the second aspect.

According to a fifth aspect, this application further provides a method for preparing a battery packaging film, including: uniformly mixing ceramic powder and glue emulsion to make a first nano ceramic mixture; coating an upper surface and a lower surface of copper foil with the first nano ceramic mixture; drying the coated copper foil, and then performing calendering to form a first nano ceramic layer and a second nano ceramic layer on the upper surface and the lower surface of the copper foil; coating surfaces of the first nano ceramic layer and the second nano ceramic layer with a binder to form a first bonding layer and a second bonding layer; and bonding a first protective layer to the first bonding layer, and bonding a second protective layer to the second bonding layer.

In a possible implementation of this application, the nano ceramic powder is a mixture of one or more of the following inorganic substances: silicon oxide (SiO₂), boehmite (AlOOH), aluminum oxide (Al₂O₃), zirconium oxide (ZrO₂), zinc oxide (ZnO), titanium oxide (TiO₂), and silicon carbide (SiC).

In a possible implementation of this application, the glue emulsion is a mixture of one or more of a polyvinylidene fluoride (PVDF) solution, a styrene-butadiene rubber (SBR) solution, a carboxymethyl cellulose (CMC) solution, a polyacrylic acid (PAA) solution, and a polyacrylonitrile (PAN) solution.

In a possible implementation of this application, the binder is a mixture of one or more of phenolic resin, epoxy resin, polyvinyl acetate, methyl cyanoacrylate, ethyl cyanoacrylate, polyvinyl acetal, ethylene-vinyl acetate copolymer resin, rubber-type adhesive chloroprene rubber, butnitrile rubber, and polysulfide rubber.

### BRIEF DESCRIPTION OF DRAWINGS

FIG. 1 is a schematic diagram of a structure of an electronic device according to an embodiment of this application;
FIG. 2A is a schematic diagram of a structure of a Li battery according to an embodiment of this application;
FIG. 2B is a cross-sectional view of a Li battery along an O-O direction according to an embodiment of this application;
FIG. 3 is a schematic diagram of a structure of a battery packaging film according to an embodiment of this application;
FIG. 4 is a schematic diagram of a structure of a battery packaging film according to another embodiment of this application;
FIG. 5 is a schematic diagram of a structure of a battery packaging film according to still another embodiment of this application;
FIG. 6 is a schematic diagram of a structure of a battery packaging film according to still another embodiment of this application;
FIG. 7 is a schematic diagram of a structure of a battery packaging film according to still another embodiment of this application;
FIG. 8 is a schematic diagram of a structure of a battery packaging film according to still another embodiment of this application;
FIG. 9A is a schematic diagram of a structure of a battery packaging film according to still another embodiment of this application;
FIG. 9B is a schematic diagram of a structure of a battery packaging film according to still another embodiment of this application;
FIG. 10 is a diagram of comparison between experimental data in mechanical puncture strength of a copper-plastic film according to this application and an aluminum-plastic film in a conventional technology; and
FIG. 11 shows a preparation process of a battery packaging film according to an embodiment of this application.

### DESCRIPTION OF EMBODIMENTS

The following describes technical solutions in embodiments of this application with reference to accompanying drawings in embodiments of this application. It is clear that the described embodiments are merely some rather than all of embodiments of this application.

The following terms such as "first" and "second" are merely intended for ease of description, and shall not be understood as indicating or implying relative importance or implying a quantity of indicated technical features. Therefore, features defined with "first", "second", and the like may explicitly or implicitly include one or more such features. In description of this application, unless otherwise stated, "a plurality of" means two or more than two.

In addition, in embodiments of this application, orientation terms such as "upper" and "lower" may include but are not limited to being defined relative to schematic placement orientations of components in accompanying drawings. It should be understood that these orientation terms may be relative concepts and are used for description and clarification relative to the schematic placement orientations of the components, and may vary correspondingly based on changes of the placement orientations of the components in the accompanying drawings.

Before embodiments of this application are described, technical terms in this application are first described.

Separator (Separator): It may refer to a medium for separating a positive electrode and a negative electrode of a cell and preventing a short circuit caused by direct contact between the positive electrode and the negative electrode. Basic characteristics of the separator are porosity (which provides a channel for ion transmission) and insulation (which prevents electric leakage). The separator may include a base separator and a separator coating layer. Base separator (Base separator): It may refer to a polyolefin microporous film part in the separator. The base separator may be used separately in the cell. The base separator may provide the porosity and the insulation. Separator coating layer (Separator coating layer): It may refer to a thin layer attached to the base separator. The separator coating layer may be attached to the base separator by coating. The separator coating layer may be configured to enhance performance of the separator, for example, improve heat resistance and adhesion of the separator.

Cell (core or cell): It may refer to a part that has a power storage function in a battery. The cell may include a positive electrode, a negative electrode, and a separator.

Heat abuse (Heat abuse): It may refer to abuse of the cell in a heat (or high temperature) aspect. A hot box may be used to perform a heat abuse test on the cell (for example, the cell is baked at a high temperature (≥ 130°C)).

Mechanical abuse (Mechanical abuse): It may refer to abuse of the cell in a mechanical aspect. A mechanical abuse test may be performed on the cell by using a needling test or an impact test.

Puncture strength (Puncture strength): It may refer to that a spherical steel needle with a diameter of 1.0 mm is used to puncture the separator at a speed of 300±10 mm/min, and a force required by the steel needle to penetrate the separator is puncture strength of the separator.

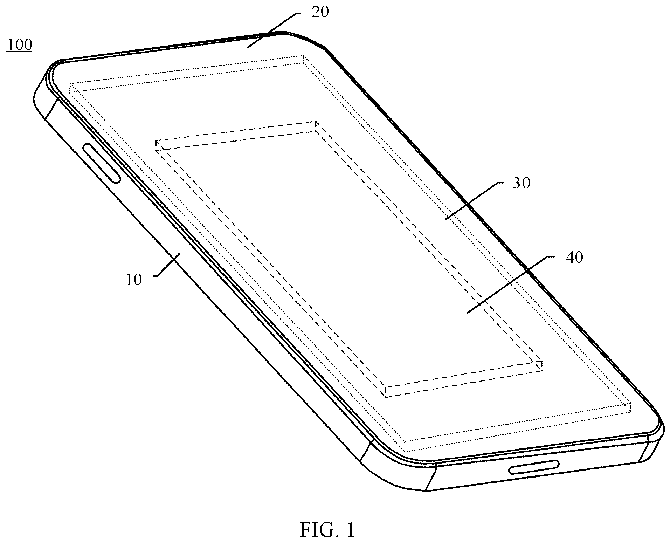

FIG. 1 is a schematic diagram of a structure of an electronic device 100 according to an embodiment of this application.

The electronic device 100 may be an end consumer product or a 3C electronic product (computer (computer), communication (communication), or consumer (consumer) electronic product), for example, a device such as a mobile phone, a mobile power supply, a portable computer, a tablet computer, an e-reader, a notebook computer, a digital camera, a vehicle-mounted device, a wearable device, or a headset. Alternatively, the electronic device 100 may be an electronic product such as a rechargeable electric vehicle, a small rechargeable household appliance (for example, a soy milk machine or a floor sweeping robot), or an unmanned aerial vehicle. A specific form of the electronic device is not specifically limited in embodiments of this application.

The electronic device 100 includes a housing 10, a display screen 20, and a circuit board assembly 30. Specifically, the housing 10 includes a frame and a rear cover. The frame surrounds a periphery of the display screen 20 and a periphery of the rear cover. A cavity formed by the display screen 20, the frame, and the back cover may be used to place the circuit board assembly 30. In an example, both the display screen 20 and the circuit board assembly 30 may be disposed on the housing 10. The electronic device 100 further includes a power supply 40 for supplying power to the circuit board assembly 30. The power supply 40 may be, for example, a lithium-ion battery.

A battery packaging film provided in embodiments of the present invention may be applied to a soft-packed chemical battery, for example, a Li battery or a Na battery. A specific type of the soft-packed chemical battery to be used is not specifically limited in embodiments of the present invention. The following uses the Li battery as an example to briefly describe a battery structure.

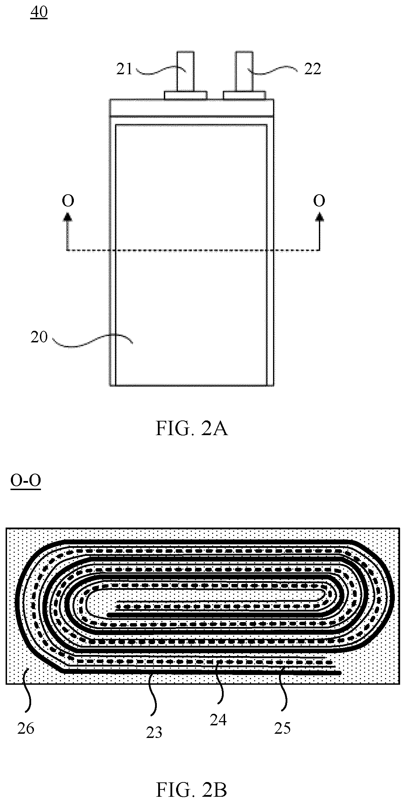

As shown in FIG. 2A, the Li battery 01 may include a battery packaging film 20 and a positive tab 21 and a negative tab 22 that extend out of the battery packaging film 20. In addition, the Li battery further includes a bare cell that is located inside the battery packaging film 20 and that is shown in FIG. 2B (a cross-sectional view obtained by cutting along a dashed line O-O in FIG. 2A). The bare cell includes a positive electrode 23, a negative electrode 24, and a separator 25 located between the positive electrode 23 and the negative electrode 24. The positive electrode 23, the negative electrode 24, and the separator 25 are placed in the battery packaging film 20 in a stacked and coiled manner, and an electrolyte 26 is further disposed in the battery packaging film 20.

When the Li battery is charged, lithium ions are generated on the positive electrode 23 of the battery, and the generated lithium ions move to the negative electrode 24 through the electrolyte 26. Carbon in an active substance of the negative electrode 24 is in a layered structure with many micropores, so that the lithium ions reaching the negative electrode 24 are embedded into the micropores of the carbon layer. More lithium ions embedded into the micropores indicate a higher charging capacity of the lithium battery. In addition, when the lithium battery discharges, the lithium ions embedded into the micropores of the carbon layer move out, and return to the positive electrode 23 after passing through the electrolyte 26. In this case, more lithium ions returning to the positive electrode 23 indicate a higher discharge capacity.

It should be noted that FIG. 2A and FIG. 2B show only a conventional structure of a lithium battery with two tabs, and a Li battery with another structure, for example, a lithium battery with three tabs, may also be packaged by using the battery packaging film provided in embodiments of this application. This is not specifically limited in embodiments of the present invention.

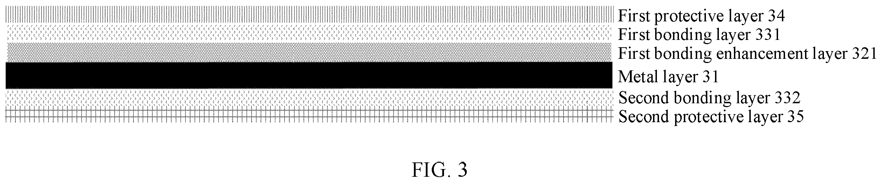

FIG. 3 is a schematic diagram of a structure of a battery packaging film according to an embodiment of this application. The battery packaging film includes a metal layer 31, a first bonding enhancement layer 321, a first bonding layer 331, a second bonding layer 332, a first protective layer 34, and a second protective layer 35. The first bonding enhancement layer 321 is located on a first surface of the metal layer 31. The first bonding layer 331 is located on a surface that is of the first bonding enhancement layer 321 and that is away from the metal layer 31. The first protective layer 34 is located on a surface that is of the first bonding layer 331 and that is away from the metal layer 31. The second bonding layer 332 is located between the metal layer 31 and the second protective layer 35. The second protective layer 35 is located on a surface that is of the second bonding layer 332 and that is away from the metal layer 31.

It should be noted that if a bare cell is wrapped by using the battery packaging film, the first protective layer 34 is located on a side away from the bare cell, and the second protective layer 35 is located on a side close to the bare cell.

Optionally, a melting point of the first protective layer is higher than a melting point of the second protective layer. The battery packaging film wraps the battery, and the second protective layer is melted to form a closed space for accommodating the bare cell.

It should be noted that, the first bonding enhancement layer is a mixture layer that is obtained by using a nano inorganic material and a glue emulsion and that evenly coats the surface of the metal layer by using a physical method and then is evenly distributed on the upper surface of the metal layer after drying and tight roll processing, to increase roughness of the upper surface of the metal. Then, one or more binder layers coat or adhere to the first bonding enhancement layer to form the first bonding layer. Finally, the first protective layer is bonded to the first bonding layer. Because the first bonding enhancement layer is added to the upper surface of the metal layer, the roughness of the upper surface of the metal layer is increased, so that strength of bonding between the first protective layer and the metal layer is increased. Because the first protective layer is firmly bonded to the metal layer, it is more difficult to strip the first protective layer from the metal layer, so that safety of the battery packaging film is improved.

In addition, if the first protective layer is inevitably damaged, the first bonding enhancement layer coating the surface of the metal layer in this embodiment of the present invention may further prevent the metal layer in the battery packaging film from being corroded due to exposure. If the metal layer is corroded, strength of the battery packaging film is reduced. If an external force is applied to a corroded position, the bare cell loses protection of the last layer. Therefore, adding the first bonding enhancement layer to the battery packaging film can further protect the metal layer. The metal layer is more protected, so that a possibility that the metal layer is exposed is reduced, and a possibility that the metal layer is in contact with or another metal is corroded is also reduced. For example, if a battery is made by using the battery packaging film to wrap a bare cell, safety of the battery is also greatly improved.

It should be noted that, because the first bonding enhancement layer is added, strength of the battery packaging film is increased, so that safety of the battery packaging film is improved.

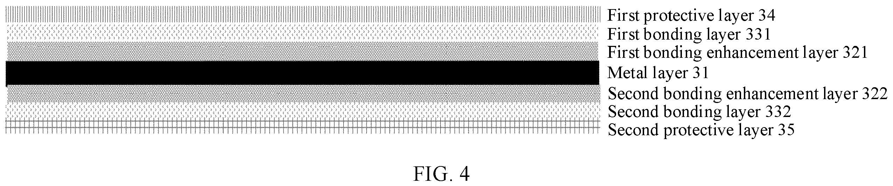

FIG. 4 is a schematic diagram of a structure of a battery packaging film according to another embodiment of this application. The battery packaging film includes a metal layer 31, a first bonding enhancement layer 321, a second bonding enhancement layer 322, a first bonding layer 331, a second bonding layer 332, a first protective layer 34, and a second protective layer 35. The first bonding enhancement layer 331 is located on a first surface of the metal layer. The first bonding layer 331 is located on a surface that is of the first bonding enhancement layer 321 and that is away from the metal layer 31. The first protective layer 34 is located on a surface that is of the first bonding layer 331 and that is away from the metal layer 31. The second bonding enhancement layer 322 is located on a second surface of the metal layer 31. The first surface is opposite to the second surface. The second bonding layer 332 is located on a surface that is of the second bonding enhancement layer 322 and that is away from the metal layer 31. The second protective layer 35 is located on a surface that is of the second bonding layer 332 and that is away from the metal layer 31.

It should be noted that, the second bonding enhancement layer 322 is added based on FIG. 3, and the second bonding enhancement layer 322 may be formed on the lower surface of the metal layer 31 in a manner the same as that in the embodiment provided in FIG. 3, so that roughness of the lower surface of the metal layer 31 can be increased, so that strength of bonding between the second protective layer 35 and the metal layer 31 is increased. Because the second protective layer 35 is firmly bonded to the metal layer 31, it is more difficult to strip the second protective layer 35 from the metal layer 31, so that safety of the battery packaging film is improved.

In addition, if the second protective layer is inevitably damaged, the second bonding enhancement layer coating the surface of the metal layer in this embodiment of the present invention may further prevent the metal layer in the battery packaging film from being exposed, so that corrosion of the metal layer and positive and negative electrodes can be prevented, and a function of protecting a bare cell can be further improved.

It should be noted that, the second bonding enhancement layer is further added to the battery packaging film, so that strength of the battery packaging film is further increased. This improves safety of the battery packaging film.

Optionally, the first bonding enhancement layer or the second bonding enhancement layer may include nano ceramic or nano thermally conductive non-ceramic.

Optionally, a thickness of the first bonding enhancement layer or the second bonding enhancement layer is 1 um to 20 um.

Optionally, the metal layer may be an aluminum foil layer. The existence of the first bonding enhancement layer and/or the second bonding enhancement layer enhances strength of bonding between the metal layer and the protective layer, so that safety of the battery packaging film is effectively improved. Therefore, the safety of the battery packaging film is better than that of a common battery packaging film in a conventional technology.

Optionally, the metal layer is a metal or an alloy stronger than aluminum foil. Because a metal harder than the aluminum foil is used as a material of the metal layer, the battery packaging film is harder than a battery packaging film using the aluminum foil as a metal layer in a conventional technology. That is, safety of the battery packaging film is higher than that of the battery packaging film using the aluminum foil as the metal layer in the conventional technology.

Optionally, the metal layer is a metal layer including copper foil, zinc, platinum, iron, nickel, titanium, cobalt, manganese, or vanadium. Alternatively, the metal layer is an alloy layer including one or more metals including copper foil, zinc, platinum, iron, nickel, titanium, cobalt, manganese, or vanadium.

Optionally, the alloy layer is an aluminum-copper alloy or a zinc-manganese alloy.

Optionally, a melting point of the first protective layer is higher than a melting point of the second protective layer. Therefore, when a battery is made by using the battery packaging film to wrap a bare cell, the second protective layer is melted and sealed at a high temperature, while the first protective layer is not affected by the high temperature because the melting point of the first protective layer is higher than the melting point of the second protective layer.

Optionally, the first protective layer may be a PP (polypropylene, polypropylene) layer.

Optionally, the second protective layer may be a nylon layer.

Optionally, a thickness of the first protective layer is 10 um to 30 um, a thickness of the second protective layer is 20 um to 80 um, and a thickness of the metal layer is 25 um to 60 um.

The following describes diagrams of structures of several battery packaging films by using examples.

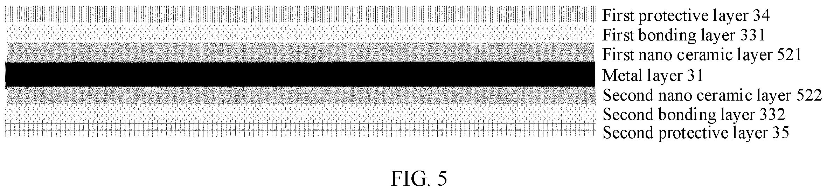

FIG. 5 is a schematic diagram of a structure of a battery packaging film according to still another embodiment of this application. Based on FIG. 4, FIG. 5 specifically shows that the first bonding enhancement layer and the second bonding enhancement layer are nano ceramic layers. That is, the first bonding enhancement layer is a first nano ceramic layer 521, and the second bonding enhancement layer is a second nano ceramic layer 522.

Optionally, the first nano ceramic layer 521 or the second nano ceramic layer 522 may be formed by mixing ceramic powder and glue emulsion. The ceramic powder accounts for a percentage of 1% to 60%, and the rest is the glue emulsion.

It should be noted that the ceramic powder is a mixture of one or more of the following inorganic substances of 0.1 nm to 100 nm: silicon oxide (SiO₂), boehmite (AlOOH), aluminum oxide (Al₂O₃), zirconium oxide (ZrO₂), zinc oxide (ZnO), titanium oxide (TiO₂), and silicon carbide (SiC).

It should be noted that the glue emulsion is a mixture of one or more of a polyvinylidene fluoride (PVDF) solution, a styrene-butadiene rubber (SBR) solution, a carboxymethyl cellulose (CMC) solution, a polyacrylic acid (PAA) solution, and a polyacrylonitrile (PAN) solution.

Surface processing is performed on the surface of the metal layer 31, so that bonding of the first protective layer 34 and the second protective layer 35 with the metal layer 31 can be enhanced, and a corrosion problem caused by exposure of the metal layer 31 after the first protective layer 34 and the second protective layer 35 are damaged can be further avoided.

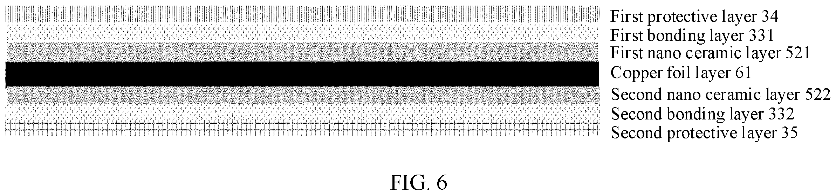

FIG. 6 is a schematic diagram of a structure of a battery packaging film according to still another embodiment of this application. Based on FIG. 5, FIG. 6 specifically shows the metal layer is a copper foil layer 61.

The metal layer of the battery packaging film provided in this embodiment of the present invention is copper foil (referred to as a copper-plastic film below). Compared with an existing aluminum-plastic film, in this embodiment, strength of the battery packaging film can be effectively improved by using a stronger copper foil layer. Ceramic processing is performed on surfaces of the copper foil to increase roughness of the surfaces of the copper foil, so that strength of bonding between the metal layer and each of the first bonding layer and the second bonding layer is effectively increased. In addition, after the first protective layer or the second protective layer is damaged, the first nano ceramic layer or the second nano ceramic layer can still be firmly adhered to the surface of the metal layer. This blocks contact between the metal layer and outside, effectively prevents contact between the metal layer and a metal substance such as positive and negative electrodes and positive and negative tabs or an electrolyte of a battery, effectively prevents corrosion, and further improves reliability of the battery packaging film.

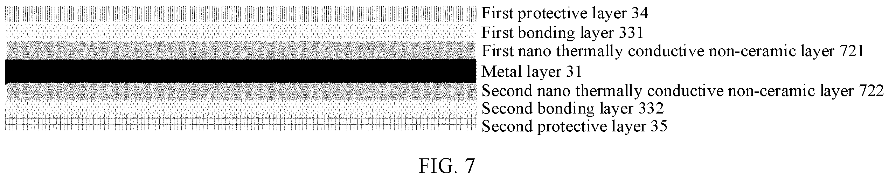

FIG. 7 is a schematic diagram of a structure of a battery packaging film according to still another embodiment. Based on FIG. 4, FIG. 7 specifically shows that the first bonding enhancement layer and the second bonding enhancement layer are nano thermally conductive non-ceramic layers. That is, the first bonding enhancement layer is specifically a first nano thermally conductive non-ceramic layer 721, and the second bonding enhancement layer is specifically a second nano thermally conductive non-ceramic layer 722.

Optionally, the first nano thermally conductive non-ceramic layer or the second nano thermally conductive non-ceramic layer may be formed by mixing ceramic powder and glue emulsion. The ceramic powder accounts for a percentage of 1% to 60%, and the rest is the glue emulsion.

The nano thermally conductive non-ceramic may be made of a 0.1 nm to 100 nm inorganic material, such as graphene and carbon nanotubes.

Because the nano thermally conductive non-ceramic layer has good thermal conductivity, heat inside a battery can still be dissipated in time when strength of the battery packaging film and surface roughness of the metal layer are improved. This avoids heat accumulation inside the battery and further improves safety of the battery packaging film.

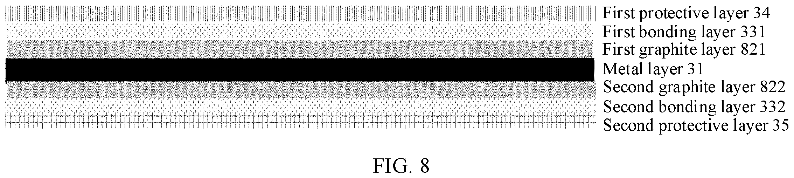

FIG. 8 is a schematic diagram of a structure of a battery packaging film according to still another embodiment. FIG. 8 specifically shows that the nano thermally conductive non-ceramic layers are graphite layers. That is, the first bonding enhancement layer is specifically a first graphite layer 821, and the second bonding enhancement layer is specifically a second graphite layer 822.

Because graphite has good thermal conductivity, the first bonding enhancement layer and/or the second bonding enhancement layer may be implemented by using graphite, so that the battery packaging film has protection and heat dissipation functions, which can effectively improve safety of the battery packaging film.

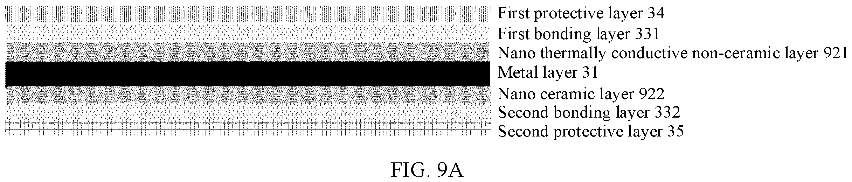

FIG. 9A is a schematic diagram of a structure of a battery packaging film according to still another embodiment. Based on FIG. 4, the first bonding enhancement layer and the second bonding enhancement layer are specifically shown. That is, the first bonding enhancement layer is specifically a nano thermally conductive non-ceramic layer 921, and the second bonding enhancement layer is specifically a nano ceramic layer 922.

In this embodiment, the first bonding enhancement layer uses the nano thermally conductive non-ceramic layer 921, so that heat generated inside a battery can be quickly exported. This further effectively improves safety of the battery.

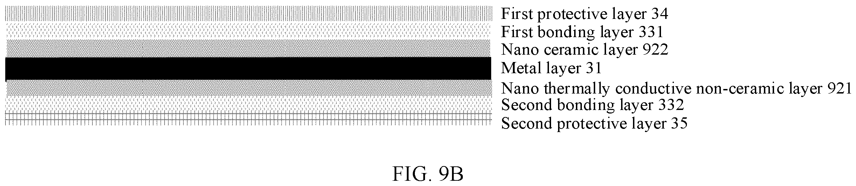

FIG. 9B is a schematic diagram of a structure of a battery packaging film according to still another embodiment. Based on FIG. 9A, positions of the nano thermally conductive non-ceramic layer 921 and the nano ceramic layer 922 are exchanged. In this way, the nano thermally conductive non-ceramic layer 921 is closer to a bare cell, and heat generated by the bare cell can be exported more quickly, so that heat inside a battery can be dissipated quickly. This further improves safety of the battery.

The embodiments of this application merely list several possible structures of the battery packaging film as examples, and are merely specific implementations of this application. However, the protection scope of this application is not limited thereto. Any variation or replacement within the technical scope disclosed in this application shall fall within the protection scope of this application. Therefore, the protection scope of this application shall be subject to the protection scope of the claims.

The following selects the battery packaging film of the structure shown in FIG. 6 to perform an experimental test, to intuitively describe performance of the battery packaging film provided in embodiments of this application.

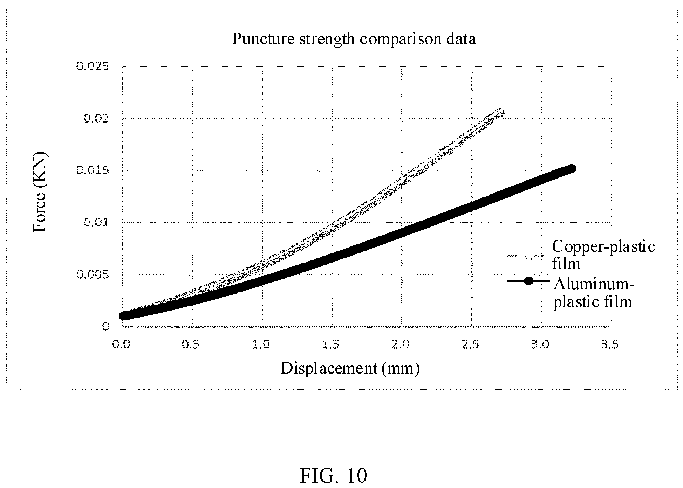

FIG. 10 is a diagram of comparison between experimental data in mechanical puncture strength of a copper-plastic film according to this application and an aluminum-plastic film in a conventional technology. A horizontal axis is a displacement of needling, and a vertical axis is magnitude of a force. It can be learned from the figure that a resistance capability of the copper-plastic film in mechanical puncture strength is better than that of the aluminum-plastic film in the conventional technology. It can be learned from FIG. 10 that a maximum value of a force applied to the copper-plastic film is about 0.02, and a maximum value of a force applied to the aluminum-plastic film is about 0.015. Therefore, 0.02/0.015 - 1=33%, that is, compared with the aluminum-plastic film in the conventional technology, the copper-plastic film in this application increases the mechanical puncture strength by about 33%.

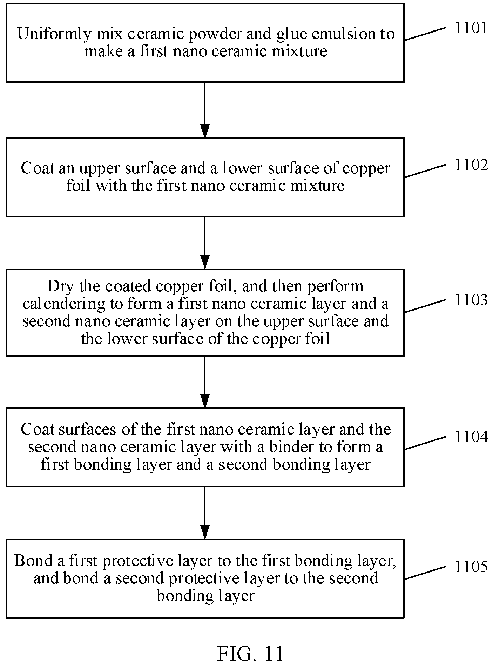

FIG. 11 shows a preparation process of a battery packaging film according to an embodiment of this application. With reference to the structure of the battery packaging film shown in FIG. 6, a preparation process of the battery packaging film is described in detail.

Step 1101: Uniformly mix ceramic powder and glue emulsion to make a first nano ceramic mixture.

Step 1102: Coat an upper surface and a lower surface of copper foil with the first nano ceramic mixture.

Step 1103: Dry the coated copper foil, and then perform calendering to form a first nano ceramic layer and a second nano ceramic layer on the upper surface and the lower surface of the copper foil.

Step 1104: Coat surfaces of the first nano ceramic layer and the second nano ceramic layer with a binder to form a first bonding layer and a second bonding layer.

Step 1105: Bond a first protective layer to the first bonding layer, and bond a second protective layer to the second bonding layer.

It should be noted that FIG. 11 shows a preparation process of a battery packaging film with reference to the structure of the battery packaging film in FIG. 6. A similar manner may be used in a preparation process of a battery packaging film of another structure, and details are not described herein again.

## Claims

1. A battery packaging film, comprising a metal layer, a first bonding enhancement layer, a first bonding layer, a second bonding layer, a first protective layer, and a second protective layer, wherein
the first bonding enhancement layer is located on a first surface of the metal layer;
the first bonding layer is located on a surface that is of the first bonding enhancement layer and that is away from the metal layer;
the first protective layer is located on a surface that is of the first bonding layer and that is away from the metal layer;
the second bonding layer is located between the metal layer and the second protective layer; and
the second protective layer is located on a surface that is of the second bonding layer and that is away from the metal layer.

2. The battery packaging film according to claim 1, wherein
the battery packaging film further comprises a second bonding enhancement layer;
the second bonding enhancement layer is located on a second surface of the metal layer, wherein the first surface is opposite to the second surface; and
that the second bonding layer is located between the metal layer and the second protective layer is specifically: the second bonding layer is located on a surface that is of the second bonding enhancement layer and that is away from the metal layer.

3. The battery packaging film according to claim 1, wherein
the first bonding enhancement layer or the second bonding enhancement layer comprises nano ceramic or nano thermally conductive non-ceramic.

4. The battery packaging film according to claim 3, wherein ceramic in the nano ceramic accounts for a percentage of 1% to 60%, or non-ceramic in the nano thermally conductive non-ceramic accounts for a percentage of 1% to 60%.

5. The battery packaging film according to claim 3 or 4, wherein the nano ceramic is a mixture of one or more of the following inorganic substances of 0.1 nm to 100 nm: silicon oxide (SiO₂), boehmite (AlOOH), aluminum oxide (Al₂O₃), zirconium oxide (ZrO₂), zinc oxide (ZnO), titanium oxide (TiO₂), and silicon carbide (SiC).

6. The battery packaging film according to claim 3 or 4, wherein the nano thermally conductive non-ceramic is graphene or carbon nanotubes.

7. The battery packaging film according to any one of claims 1 to 6, wherein a thickness of the first bonding enhancement layer or the second bonding enhancement layer is 1 um to 20 um.

8. The battery packaging film according to claims 1 to 7, wherein the metal layer is a metal or an alloy stronger than aluminum.

9. The battery packaging film according to claim 8, wherein the metal layer is a metal layer comprising copper foil, zinc, platinum, iron, nickel, titanium, cobalt, manganese, or vanadium; or the metal layer is an alloy layer comprising one or more metals comprising copper foil, zinc, platinum, iron, nickel, titanium, cobalt, manganese, or vanadium.

10. The battery packaging film according to claim 9, wherein the alloy layer is an aluminum-copper alloy or a zinc-manganese alloy.

11. The battery packaging film according to any one of claims 1 to 10, wherein a melting point of the first protective layer is higher than a melting point of the second protective layer.

12. The battery packaging film according to any one of claims 1 to 11, wherein a thickness of the first protective layer is 10 um to 30 um.

13. The battery packaging film according to any one of claims 1 to 12, wherein a thickness of the second protective layer is 20 um to 80 um.

14. The battery packaging film according to any one of claims 1 to 13, wherein a thickness of the metal layer is 25 um to 60 um.

15. A battery, wherein the battery comprises a bare cell and the battery packaging film according to any one of claims 1 to 14, and the battery packaging film wraps the bare cell;
the first protective layer is located on a side away from the bare cell; and
the second protective layer is located on a side close to the bare cell.

16. The battery packaging film according to claim 15, wherein the battery is a lithium-ion battery.

17. An electronic device, wherein the electronic device comprises a display screen, a circuit board, a housing, and the battery according to claim 15 or 16; and
the battery and the display screen are respectively located on two sides of the circuit board, and are accommodated in a closed space formed by the housing.

18. A method for preparing a battery packaging film, comprising:
uniformly mixing ceramic powder and glue emulsion to make a first nano ceramic mixture;
coating an upper surface and a lower surface of copper foil with the first nano ceramic mixture;
drying the coated copper foil, and then performing calendering to form a first nano ceramic layer and a second nano ceramic layer on the upper surface and the lower surface of the copper foil;
coating surfaces of the first nano ceramic layer and the second nano ceramic layer with a binder to form a first bonding layer and a second bonding layer; and
bonding a first protective layer to the first bonding layer, and bonding a second protective layer to the second bonding layer.

19. The method for preparing a battery packaging film according to claim 18, wherein the nano ceramic powder is a mixture of one or more of the following inorganic substances: silicon oxide (SiO₂), boehmite (AlOOH), aluminum oxide (Al₂O₃), zirconium oxide (ZrO₂), zinc oxide (ZnO), titanium oxide (TiO₂), and silicon carbide (SiC).

20. The method for preparing a battery packaging film according to claim 18 or 19, wherein the glue emulsion is a mixture of one or more of a polyvinylidene fluoride (PVDF) solution, a styrene-butadiene rubber (SBR) solution, a carboxymethyl cellulose (CMC) solution, a polyacrylic acid (PAA) solution, and a polyacrylonitrile (PAN) solution.

21. The method for preparing a battery packaging film according to any one of claims 18 to 20, wherein the binder is a mixture of one or more of phenolic resin, epoxy resin, polyvinyl acetate, methyl cyanoacrylate, ethyl cyanoacrylate, polyvinyl acetal, ethylene-vinyl acetate copolymer resin, rubber-type adhesive chloroprene rubber, butnitrile rubber, and polysulfide rubber.
